# EUROPEAN PATENT SPECIFICATION

(11) **EP 3 318 829 B1**
(45) Date of publication and mention of the grant of the patent: **11.05.2022**
(21) Application number: 16197255.9
(22) Date of filing: 04.11.2016
(51) Int. Cl.: F25J 1/00, F25J 1/02, F25J 3/06

(54) **SYSTEM AND METHOD FOR PRODUCING LIQUID CARBON DIOXIDE**
SYSTEM UND VERFAHREN ZUR HERSTELLUNG VON FLÜSSIGKOHLENDIOXID
SYSTÈME ET PROCÉDÉ PERMETTANT DE PRODUIRE DU DIOXYDE DE CARBONE LIQUIDE

(43) Date of publication of application: 09.05.2018
(73) Proprietor: General Electric Technology GmbH, 5400 Baden (CH)
(72) Inventor: STALLMANN, Olaf, 55252 Wiesbaden (DE); GISART, Frank, 55252 Wiesbaden (DE); BRITZ, Christian Karl, 55252 Wiesbaden (DE); CARUSO, Andrea, 55252 Wiesbaden (DE); WEITZEL, Marcus Jörg, 55252 Wiesbaden (DE)
(74) Representative: Wesela-Bauman, Grzegorz

(56) References cited:
- EP-A1- 1 444 472
- EP-A1- 1 776 553
- ASPELUND A ET AL: "SHIP TRANSPORT OF CO2: Technical SOlutions and Analysis of Costs, Energy Utilization, Exergy Efficiency and CO2 Emissions", CHEMICAL ENGINEERING RESEARCH AND DESIGN, ELSEVIER, AMSTERDAM, NL, vol. 84, no. A9, 1 September 2006 (2006-09-01), pages 847-855, XP009093670, ISSN: 0263-8762, DOI: 10.1205/CHERD.5147

## Description

### TECHNICAL FIELD

Embodiments of the invention relate generally to technologies for reducing carbon emissions in a flue gas, and more specifically, to a system and method for producing liquid carbon dioxide ("CO₂").

### DISCUSSION OF ART

Many power plants utilize boilers that combust fuels, e.g., coal, oil, and/or gas, to generate steam, which, in turn, is used to produce electricity via a steam turbine generator. As will be appreciated, many boilers generate flue gases that typically contain large amounts of CO₂ gas. Due to increased concerns that CO₂ may be contributing to global warming, many power plants incorporate carbon capture and storage ("CCS") or utilization ("CCU") technologies that capture/remove CO₂ from flue gases prior to emission of the flue gases into the atmosphere. Many CCS/CCU technologies typically condense the captured CO₂ into liquid form for subsequent storage/transportation in a tank or pipeline.

In order to condense CO₂ gas into a liquid, many CCS/CCU technologies compress the CO₂ gas to high pressures, e.g., greater than 60 bar, via multi-stage compressors and then use a primary cooling water circuit of an encompassing power plant to cool and condense the compressed CO₂ gas into liquid CO₂. Use of a primary cooling water supply to condense the highly compressed CO₂ gas, however, becomes impractical when the intended storage temperature of the liquefied CO₂ is at and/or near the temperature of the primary cooling water circuit. Further, the high temperatures involved in compressing CO₂ to high levels and subsequent condensation via a primary cooling circuit for a power plant, can potentially place high strains on the primary cooling water circuit. Additionally, the equipment needed for compressing CO₂ to high levels and to condense the highly compressed CO₂ gas into liquid CO₂, e.g., a multi-stage compressors, coolers, and/or knock out drums, requires a relatively large amount of floor space within an encompassing power plant.

In the scientific article "Ship transport of CO2" by A. Aspelund, M- J. Molnvik and G. de Koeijer a system for liquefying CO₂ is described based on a two stage compression before condensing the CO₂, according to the preamble of the independent claims.

WO 03/042614 A1 describes a method and apparatus for refrigerating and liquefying an industrial gas, according to the preamble of the independent claims, wherein a multicomponent refrigerant is used to generate refrigeration in a single circuit.

What is needed, therefore, is an improved system and method for producing liquid CO₂.

### BRIEF DESCRIPTION

According to the invention, independent claim 1 provides a method for producing liquid carbon dioxide.

According to the invention, independent claim 9 provides a system for producing liquid carbon dioxide.

In yet another embodiment, not according to the invention, a refrigeration unit for a system for producing liquid carbon dioxide is provided. The refrigeration unit includes a first heat exchanger that condenses a carbon dioxide gas stream in a flow path defined by one or more conduits of the system into liquid carbon dioxide. The first heat exchanger is disposed in an independent cooling circuit that is separate from a primary cooling circuit of the system.

### DRAWINGS

The present invention will be better understood from reading the following description of non-limiting embodiments, with reference to the attached drawings, wherein below:
FIG. 1 is a schematic block diagram of a system for producing liquid CO₂ in accordance with an embodiment of the present invention;
FIG. 2 is a Mollier diagram that depicts condensation of CO₂ by the system of FIG. 1 in accordance with an embodiment of the present invention;
FIG. 3 is a flow chart that depicts a method for producing liquid CO₂ utilizing the system of FIG. 1 in accordance with an embodiment of the present invention; and
FIG. 4 is another flow chart that depicts the method of FIG. 3 for producing liquid CO₂ utilizing the system of FIG. 1 in accordance with an embodiment of the present invention.

### DETAILED DESCRIPTION

Reference will be made below in detail to exemplary embodiments of the invention, examples of which are illustrated in the accompanying drawings. Wherever possible, the same reference characters used throughout the drawings refer to the same or like parts, without duplicative description.

As used herein, the terms "substantially," "generally," and "about" indicate conditions within reasonably achievable manufacturing and assembly tolerances, relative to ideal desired conditions suitable for achieving the functional purpose of a component or assembly.

The term "real-time," as used herein, means a level of processing responsiveness that a user senses as sufficiently immediate or that enables the processor to keep up with an external process.

As used herein, "electrically coupled", "electrically connected", and "electrical communication" mean that the referenced elements are directly or indirectly connected such that an electrical current, or other communication medium, may flow from one to the other. The connection may include a direct conductive connection, i.e., without an intervening capacitive, inductive or active element, an inductive connection, a capacitive connection, and/or any other suitable electrical connection. Intervening components may be present.

As also used herein, the term "fluidly connected" means that the referenced elements are connected such that a fluid (to include a liquid, gas, and/or plasma) may flow along a flow path from one to the other.

The term "stream," as used herein, refers to the sustained movement of a substance, e.g., a gas, solid, liquid, and/or plasma.

Accordingly, the terms "upstream" and "downstream," as used herein, describe the position of the referenced elements with respect to a flow path of a gas, solid, liquid, and/or plasma flowing between and/or near the referenced elements.

As also used herein, the term "heating contact" means that the referenced elements are in proximity of one another such that heat/thermal energy can transfer between them.

Further, the term "ambient temperature," as used herein, refers to the temperature of the atmosphere surrounding the referenced element.

Further still, the term "condensation temperature," as used herein, refers to a temperature at which a gas begins to condense into a liquid at a given pressure.

Additionally, while the embodiments disclosed herein are described with respect to CCS/CCU technologies and methods thereof, it is to be understood that embodiments of the present invention may be applicable to other systems and/or processes where a gas, and/or other substance, needs to be condensed prior to storage and/or use.

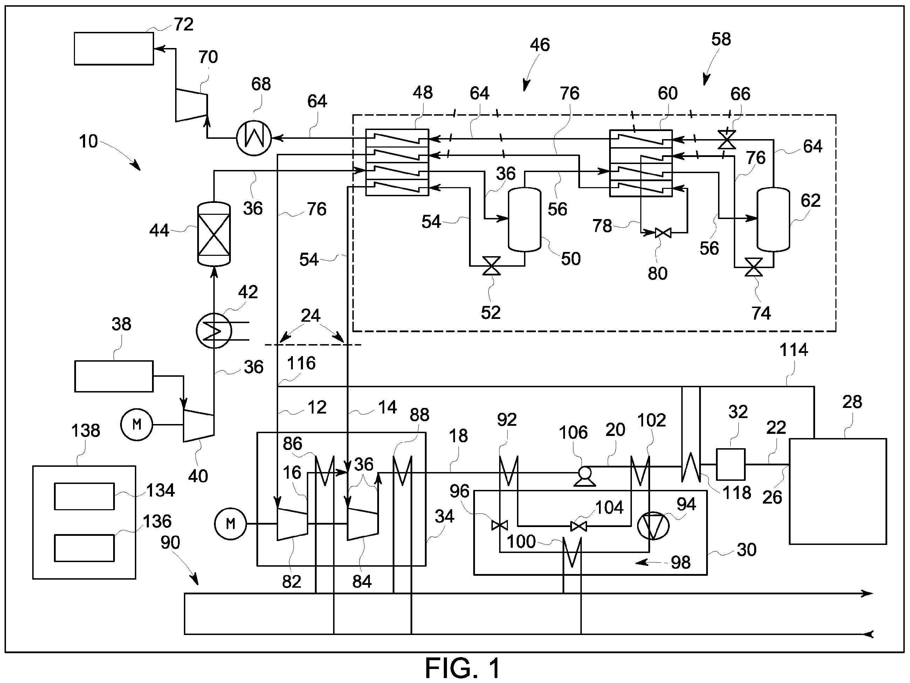

Referring now to FIG. 1, the major components of a system 10 for producing liquid CO₂ is shown. In embodiments, the system 10 includes one or more conduits 12, 14, 16, 18, 20, 22 that define a flow path having a first end 24 (depicted generally as the section of conduits 12 and 14 crossing the dashed line) and a second end 26. While the first end 24 of the flow path is depicted herein as being defined by both conduits 12 and 14, it will be understood that the first end 24 of the flow path may be defined by any number of conduits, to include a single conduit, that fluidly connect to the second end 26. The system 10 further includes a product stage 28 fluidly connected to the second end 26 of the flow path, a refrigeration unit 30 in heating contact with the flow path downstream of the first end 24, and a pressure regulator 32 disposed in the flow path downstream of the refrigeration unit 30. In embodiments, the system 10 also include a compressor 34 disposed downstream of the first end 24 of the flow path and upstream of the refrigeration unit 30.

As further shown in FIG. 1, the system 10 includes a plurality of components upstream of the first end 24 of the flow path that process and condition a CO₂ gas stream 36 generated by a CO₂ source 38, e.g., a boiler and/or other system/device that produces a CO₂ gas stream, that is eventually received by the first end 24 of the flow path. For example, in embodiments, the CO₂ gas stream 36 may be compressed by a compressor 40 after entering the system 10 from the CO₂ source 38. The compression may be a multi-stage compression process with coolers and water separators between each compression stage (not shown), which may separate out most of the water vapor from the CO₂ gas stream 36. The CO₂ gas stream 36 exits the compressor 40 with a temperature significantly higher than the surrounding ambient temperature, and is then cooled by a cooler 42. In embodiments, the CO₂ gas stream 36 leaves the cooler 42 at about 13 °C and at about 35.7 bar. Any remaining moisture in the CO₂ gas stream 36 is then freed by a suitable drying process, e.g., adsorption dried in a drier 44, and subsequently conveyed to a first separation stage 46.

In embodiments, the first separation stage 46 includes a heat exchanger 48 and a separation drum 50. The heat exchanger 48 cools the CO₂ gas stream 36 to facilitate partial condensation of the CO₂ contained in the CO₂ gas stream 36. The CO₂ gas stream 36 then enters the first separation drum 50 as a two-phase mixture, and the liquid phase and the gaseous phases of the CO₂ gas stream 36 are separated by gravity. As will be understood, in embodiments, the approximate pressure and temperature within the separation drum 50 may be about 34.7 bar and about -19 °C, respectively.

In embodiments, liquid CO₂ is extracted from the bottom of the separation drum 50 and then expanded via a pressure reducing valve 52 to form a partial CO₂ gas stream 54 having a pressure of approximately 18.4 bar and temperature between about - 22 °C and about -29 °C. The partial CO₂ gas stream 54 is then heated and evaporated in heat exchanger 48 via the CO₂ gas stream 36 flowing through heat exchanger 48 from the drier 44. Upon exiting the heat exchanger 48, the partial gas stream 54 enters conduit 14 having a pressure and temperature of approximately 18 bar and 25 °C.

As will be appreciated, gaseous CO₂ is extracted from the top/head of the separation drum 50 as partial CO₂ gas stream 56 that enters a second separation stage 58. Within the second separation stage 58, the CO₂ gas stream 56 is cooled by a heat exchanger 60 and partially condenses such that the CO₂ gas stream 56 enters another separation drum 62 as a two-phase mixture. Within the separation drum 62, gravity separates the liquid and gas phases of the partial CO₂ gas stream 56. As will be understood, in embodiments, the pressure and temperature within the separation drum 62 is about 34.3 bar and about -50 °C, respectively.

The gaseous CO₂ within the separation drum 62 is extracted at the top/head of the separation drum 62 as a partial gas stream 64, referred to herein as "offgas," which is then expanded to approximately 17 bar by a pressure reducing valve 66 such that it is cooled to approximately -54 °C. The offgas 64 then passes through heat exchangers 60 and 48 where it cools the partial CO₂ gas stream 56 and CO₂ gas stream 36, and thus leaves the heat exchanger 48 having a pressure of approximately 26 bar and a temperature between about 26 °C and about 30 °C. The offgas 64 may then pass through a superheater 68 and expansion turbine 70 so as to recover energy from the offgas 64 prior to being emitted into the atmosphere via a stack and/or duct 72.

In embodiments, liquid CO₂ is extracted from the bottom of the separation drum 62 and then expanded via a pressure reducing valve 74 to form a partial CO₂ gas stream 76 having a pressure of approximately 17 bar and reaching a temperature of about -54 °C. As shown in FIG. 1, the partial CO₂ gas stream 76 then passes through heat exchanger 60 wherein a liquid part of the partial CO₂ gas stream 76 evaporates such that a partial CO₂ gas stream 78 may be extracted from heat exchanger 60 and expanded by a pressure reducing valve 80 to a pressure of about 5 to 10 bar at a temperature reaching about -54 °C. The partial CO₂ gas stream 78 is then sent back through the heat exchanger 60 where it rejoins the partial CO₂ gas stream 76 which then exits the heat exchanger 60 having a pressure between 5 and 10 bar and a temperature between -22 °C and -29 °C. The partial CO₂ gas stream 76 then enters heat exchanger 48 where its temperature is raised to about -7 °C at a pressure between about 5 and 10 bar.

As further shown in FIG. 1, the two partial CO₂ gas streams 54 and 76 then enter the first end 24 of the flow path and move towards the compressor 34, which in embodiments, may be a multi-stage compressor having a first stage 82 and a second stage 84. In such embodiments, the partial CO₂ gas stream 76 passes through the first stage 82 after which it may be joined by the partial CO₂ gas stream 54, which has a pressure of about 18 bar, so as to reform CO₂ gas stream 36 prior to entering the second stage 84. As will be appreciated, one or more heat exchangers 86 and 88 may be disposed directly downstream of each of the two stages 82 and 84 and fluidly connected to a primary cooling circuit 90, which in embodiments, may have a temperature at and/or near the ambient temperature of the product stage 28. In embodiments, the primary cooling circuit 90 may utilize water and/or another appropriate heat-transferring medium, i.e., coolant. One or more knock out drums (not shown) may also be disposed downstream of each of the heat exchangers 86 and 88 so as to remove any liquefied CO₂ from the partial CO₂ gas stream 76 and the CO₂ gas stream 36. As such, in embodiments, the CO₂ gas stream 36 may leave the compressor 34 having a pressure between 60 bar and 110 bar with a temperature between about 80 °C and about 130 °C.

The CO₂ gas stream 36 then continues to flow along the flow path via conduits 18, 20, and 22 where it is condensed by the refrigeration unit 30 into liquid CO₂, and then depressurized by the pressure regulator 32, which in embodiments may be a pressure reduction valve, such that the liquid CO₂ is cooled to a storage temperature prior to being stored in the product stage 28. As will be appreciated, in embodiments, the product stage 28 may be a storage vessel, e.g., a tank, or a transportation system such as a pipeline, that stores the liquefied CO₂ at the storage temperature, which is lower than the ambient temperature of the product stage 28. For example, in embodiments, if the ambient temperature of the product stage is about 20 °C, the storage temperature may be between about 20 °C and about -56.0 °C. Accordingly, in embodiments, the liquefied CO₂ may leave the refrigeration unit 30 at a temperature between about 20 °C and about -56.0 °C and then be depressurized by the pressure regulator to about 6 bar.

As further illustrated in FIG. 1, according to the invention, the refrigeration unit 30 includes a first heat exchanger 92 in heating contact with the flow path, and in embodiments in general, includes a compressor 94, and a pressure reduction valve 96. The compressor 94 compresses a refrigerant which is then cooled via expansion by the pressure reduction valve 96 such that the cooled refrigerant flows into the heat exchanger 92 which then cools and condenses the CO₂ gas stream 36 flowing in the flow path, i.e., conduit 18. Thus, and as will be appreciated, heat exchanger 92, compressor 94, and pressure reduction valve 96 form/are disposed in an independent cooling circuit 98 that is separate from the primary cooling circuit 90, e.g., the independent cooling circuit 98 may dissipate heat removed from the CO₂ gas stream 36 into the surrounding atmosphere via one or more condenser coils (not shown). As will be appreciated, however, in some embodiments cooling of the refrigerant in the independent cooling circuit 98 may be supplemented by the primary cooling circuit 90 via a heat exchanger 100.

Additionally, according to the invention, the refrigeration unit 30 further includes a second heat exchanger 102 in heating contact with the flow path downstream of the first heat exchanger 92. The second heat exchanger 102 may be included/disposed in the independent heating circuit 98 such that refrigerant flows from the first heat exchanger 92 to the second heat exchanger 102 after being depressurized by a pressure reducing valve 104. As will be appreciated, the second heat exchanger 102 cools the liquefied CO₂ prior to depressurization via the pressure regulator 32.

According to the invention, the liquefied CO₂ is propelled through the pressure regulator 32 via a pump 106 which serves to regulate the pressure of the liquefied CO₂ prior to expansion by compressing the liquefied CO₂.

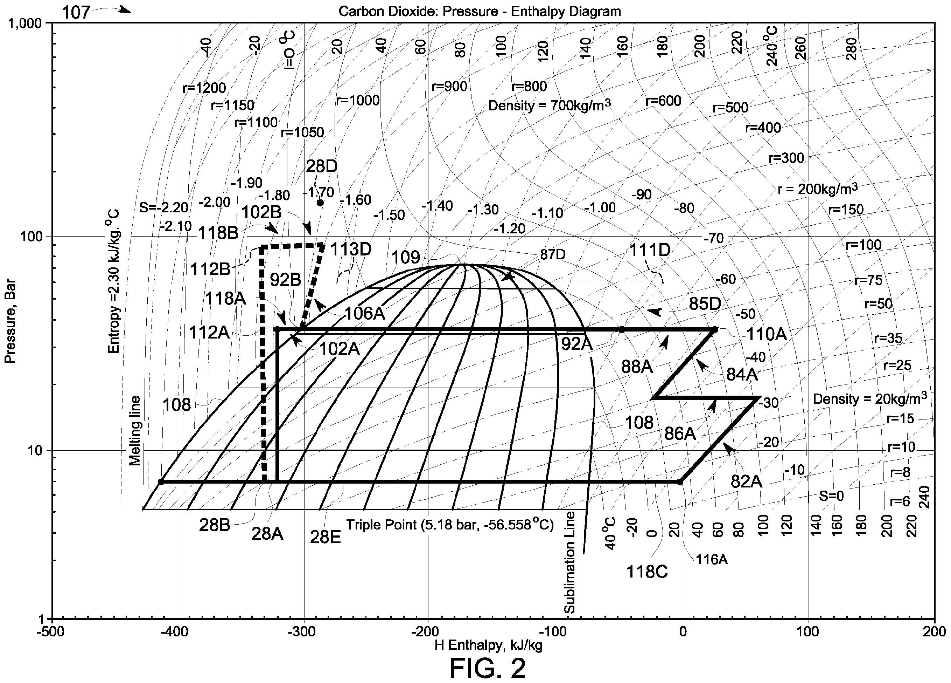

Turning now to FIG. 2, a Mollier diagram 107 that depicts condensation of CO₂ by embodiments of system 10 is shown. As will be understood, the diagram 107 depicts isotherms and entropy lines overlaid on a grid having enthalpy as the X axis and pressure as the Y-axis wherein individual points within the diagram 107 represent the matter and energy state of a substance, e.g., CO₂. Points underneath the vapor dome, the dome being represented by line 108 and having a critical point 109, refer to physical states of an unspecified amount of CO₂, wherein some of the CO₂ is in liquid form and some of the CO₂ is in gaseous form. As such, the X-axis underneath the vapor dome 108 represents the vapor fraction, i.e., the amount of gaseous CO₂ to liquid CO₂ at a particular state. Thus, all states on the vapor dome 108 to the left of the critical point 109 represent saturated liquid CO₂ having a vapor fraction of 0, whereas all states on the vapor dome 108 to the right of the critical point 109 represent saturated gaseous CO₂ having a vapor fraction of 1.

Accordingly, the compression, cooling, and subsequent compression of the CO₂ gas stream 36 by the first stage 82, heat exchanger 86, and second stage 84 is shown generally as line segments 82A, 86A, and 84A, respectively. As such, in embodiments, the CO₂ gas stream may have a state consistent with the state 110A in the diagram 107 prior to being cooled via heat exchanger 88, which is shown generally by line segment 88A. Condensation of the CO₂ gas stream into liquid CO₂ at a condensation temperature via the first heat exchanger 92 of the refrigeration unit 30 is shown generally as the line segment between 92A and 92B, and, in embodiments, may occur approximately between 40 bar and 60 bar.

Cooling of the liquid CO₂ via heat exchanger 102 wherein the liquid CO₂ is not pressurized via a pump, e.g., pump 106, i.e., not in accordance with the invention, is shown generally as the line segment 102A. In such embodiments, not in accordance with the invention, the liquid CO₂ may reach a state consistent with 112A prior to being depressurized via the pressure regulator 32 to a state consistent with 28A before being sent to the product stage 28, which may be at about -50 °C.

In embodiments according to the invention, that include a pump, e.g., pump 106, pressurization of the liquid CO₂ via the pump 106 is shown generally as the dashed line segment marked 106A, with the subsequent cooling of the pressurized liquid CO₂ via heat exchanger 102 shown generally as the dashed line segment 102B. In embodiments according to the invention, including the pump 106, the liquid CO₂ reaches a state consistent with 112B prior to being depressurized via the pressure regulator 32 to a state consistent with 28B before being sent to the product stage 28, which, may be at about -50 °C.

For the purpose of comparison, a traditional method of producing liquid CO₂ via compressing the CO₂ gas stream to high pressures is also shown within the diagram 107. In such methods, the CO₂ gas stream may be brought to the line segment marked generally as 88A in a manner similar to the one described above utilizing the first two stages of a multistage compressor. Instead of condensing the CO₂ via the refrigeration unit 30, however, such traditional methods typically further compress the CO₂ via a third compressor stage, shown generally by the dashed line segment 85D, such that the CO₂ gas stream reaches a state consistent with 111D. The highly compressed CO₂ gas stream is then typically condensed via a primary cooling circuit, shown generally by the dashed line segment marked 87D, such that the CO₂ is at a state consistent with 113D before being pressurized and/or cooled to a state consistent with 28D prior to being sent a product stage at about 15 °C.

As will be appreciated, however, attempting to transition the highly compressed CO₂ from the state 113D to a low temperature storage state 28E, which may have a temperature of about -50 °C, via cooling and/or depressurization, is less efficient than utilizing the refrigeration unit 30 and pressure regulator 32 to arrive at storage states 28A or 28B in the manner discussed above. For example, depressurization of liquefied CO₂ causes some of the liquefied CO₂ to change into CO₂ gas that accumulates within the product stage 28. In embodiments, the CO₂ gas that accumulates within the product stage 28 is extracted from the product stage 28 as a gas stream, referred to herein as "CO₂ boil off" 114 (FIG. 1). The larger the vapor fraction of the CO₂ at the product stage 28, the larger the amount of CO₂ boil off 114.

As shown in the diagram 107, the vapor fractions at 28A and 28B are less than the vapor fraction of the CO₂ at 28E. Accordingly, condensing, cooling, and refrigerating the CO₂ via the refrigeration unit 30 and pressure regulator 32, as described above to reach storage states 28A and 28B, results in less CO₂ boil off 114 than compressing and cooling the CO₂ to state 113D and then cooling and/or depressurizing to storage state 28E.

Additionally, it is more efficient to reach the storage states 28A, not in accordance with the invention, or 28B, according to the invention, via condensing, cooling, and depressurizing the CO₂ via the refrigeration unit 30 and the pressure regulator 32, than it is to directly condense the CO₂ at -50 °C. In other words, refrigeration systems capable of directly condensing CO₂ at -50 °C typically have higher energy demands at -50 °C than the refrigeration unit 30 which, in embodiments, may condense the CO₂ at around 0 °C. For example, a given refrigeration system capable of directly condensing CO₂ at -50 °C may have a Coefficient of Performance ("COP"), i.e., the refrigeration duty/refrigeration compression power, of 1-2 Megawatt thermal ("MWth") / Megawatt electric ("MWel") at -50 °C, while the refrigeration unit 30 of the present invention may have a COP of 4-6 MWth/MWel at 0 °C.

Referring back to FIG. 1, as will be further appreciated, in some embodiments, the CO₂ boil off 114 is returned back to the flow path at a point 116 upstream of the refrigeration unit 30 wherein the CO₂ boil off 114 may have a state consistent with 116A (FIG.2). As such, the CO₂ boil off 114 may be used to cool the liquid CO₂ at a point downstream of the refrigeration unit 30 via a heat exchanger 118, which in embodiments, may be disposed upstream of the pressure regulator 32. After cooling the liquid CO₂, the CO₂ boil off 114 may then be returned back to the flow path. As will be understood, in embodiments, the return point 116 of the CO₂ boil off 114 may be upstream of the compressor 34. As will be appreciated, cooling of the liquid CO₂ via heat exchanger 118 is shown generally by line segment 118A (FIG. 2) in embodiments not in accordance with the invention, that do not pressurize the CO₂ via pump 106, and by line segment 118B (FIG. 2) in embodiments according to the invention, that do pressurize the CO₂ via the pump 106. Additionally, the state of the CO₂ boil off 114 in the heat exchanger 118 is shown generally as line segment 118C.

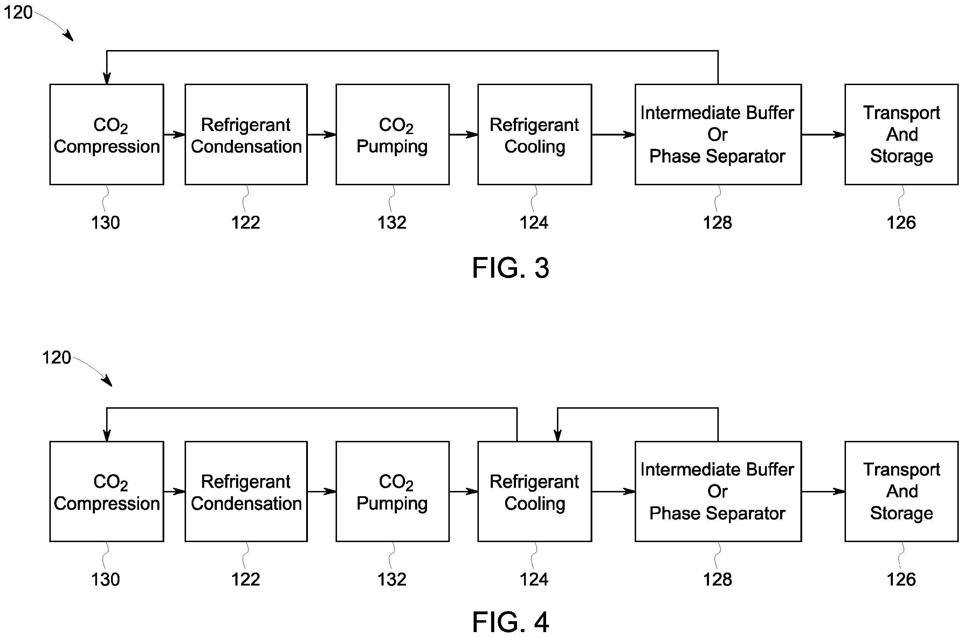

Accordingly, turning now to FIGS. 3 and 4, a method 120 for producing liquid CO₂ by utilizing the system 10 is shown. In embodiments according to the invention, the method 120 includes condensing 122 the CO₂ gas stream 36 into liquid CO₂, cooling 124 the liquid CO₂, and storing 126 the liquid CO₂. As discussed above, condensing 122 the CO₂ gas stream 36 into liquid CO₂ is performed via the first heat exchanger 92 of the refrigeration unit 30; and cooling 124 the liquefied CO₂ is performed via the second heat exchanger 102 of the refrigeration unit 30, the pressure regulator 32, and potentially also the CO₂ boil off 114 as shown in FIG. 4 by the arrow from box 128 to box 124. The method 120 may further include compressing 130 the CO₂ gas stream 36 via the compressor 34 prior to condensing 122 the CO₂ gas stream 36. The method 120 may further include returning the CO₂ boil off 114 back to the flow path as shown by the arrow from box 128 to box 130 in FIG. 3 and the arrow from box 124 to box 130 in FIG. 4. According to the invention, the method 120 further includes pressurizing 132 the CO₂ performed via the pump 106 as stated above.

Finally, returning back to FIG. 1, it is also to be understood that the system 10 may include the necessary electronics, software, memory, storage, databases, firmware, logic/state machines, microprocessors, communication links, displays or other visual or audio user interfaces, printing devices, and any other input/output interfaces to perform the functions described herein and/or to achieve the results described herein. For example, the system 10 may include at least one processor 134, and system memory/data storage structures 136 in the form of a controller 138. The memory 136 may include random access memory (RAM) and read-only memory (ROM). The at least one processor 134 may include one or more conventional microprocessors and one or more supplementary co-processors such as math co-processors or the like. The data storage structures discussed herein may include an appropriate combination of magnetic, optical and/or semiconductor memory, and may include, for example, RAM, ROM, flash drive, an optical disc such as a compact disc and/or a hard disk or drive.

Additionally, a software application that provides for control, which may be in real-time, over one or more of the various components of the system 10, e.g., the refrigeration unit 30, pressure regulator 32, compressor 34, etc., may be read into a main memory of the at least one processor 134 from a computer-readable medium. The term "computer-readable medium," as used herein, refers to any medium that provides or participates in providing instructions to the at least one processor 134 of the system 10 (or any other processor of a device described herein) for execution. Such a medium may take many forms, including but not limited to, non-volatile media and volatile media.

While in embodiments, the execution of sequences of instructions in the software application causes the at least one processor 134 to perform the methods/processes described herein, hard-wired circuitry may be used in place of, or in combination with, software instructions for implementation of the methods/processes of the present invention. Therefore, embodiments of the present invention are not limited to any specific combination of hardware and/or software.

Yet still other embodiments not in accordance with the invention, provide for a refrigeration unit for a system for producing liquid carbon dioxide. The refrigeration unit includes a first heat exchanger that condenses a carbon dioxide gas stream in a flow path defined by one or more conduits of the system into liquid carbon dioxide. The first heat exchanger is disposed in an independent cooling circuit that is separate from a primary cooling circuit of the system. In certain embodiments, the refrigeration unit further includes a second heat exchanger that cools the liquid carbon dioxide in the flow path downstream of the first heat exchanger. In such embodiments, the second heat exchanger is disposed in the independent cooling circuit.

Accordingly, by utilizing a refrigeration unit to facilitate condensation of CO₂ at low temperatures, some embodiments provide for a reduction in the operating pressures along the flow path, which in turn may provide for a reduction in size and/or elimination of the compressor. Thus, as the equipment for the refrigeration unit and pressure regulator is typically smaller, i.e., takes up less floor space, than the equipment required for the compressor, e.g., compressing stages and knock out drums, some embodiments provide for an overall reduction in the floor space required by the system as compared to other CCS/CCU technologies/systems. Such embodiments may also provide for a reduction in size and/or elimination of compensation legs within the flow path.

Further, the independent cooling circuits of some embodiments allows the system to place less strain on the primary cooling circuit of an encompassing power plant. Thus, such embodiments may provide for a substantial increase in overall efficiency in liquefying CO₂ as compared to prior CCS/CCU technologies and systems.

Additionally, by recycling CO₂ boil off back into the flow path, some embodiments avoid the need to separately compress and/or condense the CO₂ boil off.

While the dimensions and types of materials described herein are intended to define the parameters of the invention, they are by no means limiting and are exemplary embodiments. Many other embodiments will be apparent to those of skill in the art upon reviewing the above description. The scope of the invention should, therefore, be determined with reference to the appended claims, along with the full scope of equivalents to which such claims are entitled.

This written description uses examples to disclose several embodiments of the invention, including the best mode, and also to enable one of ordinary skill in the art to practice the embodiments of invention, including making and using any devices or systems and performing any incorporated methods. The patentable scope of the invention is defined by the claims.

## Claims

1. A method for producing liquid carbon dioxide comprising:
receiving a carbon dioxide gas stream (36) at a first end (24) of a flow path defined by one or more conduits (12, 14, 16, 18, 20, 22);
condensing the carbon dioxide gas stream (36) into liquid carbon dioxide via a refrigeration unit (30) in heating contact with the flow path downstream of the first end (24);
depressurizing the liquid carbon dioxide via a pressure regulator (32) disposed in the flow path downstream of the refrigeration unit (30) so as to cool the liquid carbon dioxide to a storage temperature that is below an ambient temperature of a product stage (28) fluidly connected to a second end (26) of the conduit (12, 14, 16, 18, 20, 22); and
storing the liquid carbon dioxide at the storage temperature in the product stage (28), **characterized in that** condensing the carbon dioxide gas stream (36) into liquid carbon dioxide via a refrigeration unit (30) comprises:
cooling the carbon dioxide gas stream (36) via a first heat exchanger (92) of the refrigeration unit (30) to a condensation temperature;
pressurizing the liquid CO₂ by means of a pump (106) and:
subsequently cooling the liquid carbon dioxide via a second heat exchanger (102) of the refrigeration unit (30).

2. The method of claim 1, wherein condensing the carbon dioxide gas stream (36) into liquid carbon dioxide via a refrigeration unit (30) comprises:
cooling the carbon dioxide gas stream (36) to between about 20 °C and about - 56.0 °C via the first heat exchanger (92) of the refrigeration unit (30).

3. The method of claim 1, wherein the storage temperature is between about 20 °C and about -56.0 °C.

4. The method of any one of claims 1 to 3, wherein the pressure regulator (32) depressurizes the liquid carbon dioxide to 6 bar.

5. The method of any one of claims 1 to 4, further comprising:
compressing the carbon dioxide gas stream (36) via a compressor (82, 84) disposed in the flow path upstream of the refrigeration unit (30).

6. The method of claim 5, wherein the compressor (82, 84) includes less than three stages.

7. The method of any of claims 1 to 6 further comprising:
returning carbon dioxide boil off (114) from the liquid carbon dioxide stored in the product stage (28) to the flow path at a point (116) upstream of the refrigeration unit (30).

8. The method of claim 7 further comprising:
cooling the liquid carbon dioxide via the carbon dioxide boil off (114) at a point in the flow path downstream of the refrigeration unit (30).

9. A system (10) for producing liquid carbon dioxide comprising:
one or more conduits (12, 14, 16, 18, 20, 22) that define a flow path having a first end (24) for receiving a carbon dioxide gas stream (36), and a second end (26) for fluidly connecting the flow path to a product stage (28);
a refrigeration unit (30) in heating contact with the flow path downstream of the first end (24);
a pressure regulator (32) disposed in the flow path downstream of the refrigeration unit (30); and
wherein when the carbon dioxide gas stream (36) flows through the flow path, the refrigeration unit (30) condenses the carbon dioxide gas stream (36) into liquid carbon dioxide,
the pressure regulator (32) depressurizes the liquid carbon dioxide so as to cool the liquid carbon dioxide to a storage temperature that is below an ambient temperature of a product stage (28) fluidly connected to the second end (26) of the conduit (12, 14, 16, 18, 20, 22), and
the liquid carbon dioxide is stored at the storage temperature in the product stage (28), **characterized in that**
the refrigeration unit (30) includes a first heat exchanger (92) and a second heat exchanger (102) both in heating contact with the flow path, and a pump (106) between the first heat exchanger (92) and the second heat exchanger (102),
such that the refrigeration
unit (30) condenses the carbon dioxide gas stream (36) into the liquid carbon dioxide via cooling the carbon dioxide gas stream (36) via the first heat exchanger (92) to a condensation temperature, pressurizes the liquid CO₂ by means of the pump (106),
and the second heat exchanger (102) cools the liquid carbon dioxide.

10. The system (10) of claim 9, wherein the refrigeration unit condenses the carbon dioxide gas stream via cooling the carbon dioxide gas stream to between about 20 °C and about -56.0 °C.

11. The system (10) of claim 9, wherein the storage temperature is between about 20 °C and about -56.0 °C.

12. The system (10) of any one of claims 9 to 11, wherein the pressure regulator (32) depressurizes the liquid carbon dioxide to 6 bar.

13. The system (10) of any one of claims 9 to 12, further comprising:
a compressor (82, 84) disposed in the flow path upstream of the refrigeration unit (30) that compresses the carbon dioxide gas stream (36).

## Patentansprüche

1. Verfahren zum Herstellen von flüssigem Kohlendioxid, umfassend:
Aufnehmen eines Kohlendioxidgasstroms (36) an einem ersten Ende (24) eines Strömungswegs, der durch eine oder mehrere Leitungen (12, 14, 16, 18, 20, 22) definiert ist;
Kondensieren des Kohlendioxidgasstroms (36) in flüssiges Kohlendioxid über eine Kühleinheit (30) in Heizkontakt mit dem Strömungsweg stromabwärts des ersten Endes (24);
Druckentlasten des flüssigen Kohlendioxids über einen Druckregler (32), der in dem Strömungsweg stromabwärts der Kühleinheit (30) angeordnet ist, um das flüssige Kohlendioxid auf eine Speicherungstemperatur zu kühlen, die unter einer Umgebungstemperatur einer Produktstufe (28) liegt, die fluidisch mit einem zweiten Ende (26) der Leitung (12, 14, 16, 18, 20, 22) verbunden ist; und
Speichern des flüssigen Kohlendioxids bei der Speicherungstemperatur in der Produktstufe (28), **dadurch gekennzeichnet, dass** das Kondensieren des Kohlendioxidgasstroms (36) in flüssiges Kohlendioxid über eine Kühleinheit (30) umfasst:
Kühlen des Kohlendioxidgasstroms (36) über einen ersten Wärmetauscher (92) der Kühleinheit (30) auf eine Kondensationstemperatur;
Druckbeaufschlagen des flüssigen CO₂ mittels einer Pumpe (106) und:
anschließend Kühlen des flüssigen Kohlendioxids über einen zweiten Wärmetauscher (102) der Kühleinheit (30).

2. Verfahren nach Anspruch 1, wobei das Kondensieren des Kohlendioxidgasstroms (36) in flüssiges Kohlendioxid über eine Kühleinheit (30) umfasst:
Kühlen des Kohlendioxidgasstroms (36) auf zwischen etwa 20 °C und etwa -56,0 °C über den ersten Wärmetauscher (92) der Kühleinheit (30).

3. Verfahren nach Anspruch 1, wobei die Speicherungstemperatur zwischen etwa 20 °C und etwa -56,0 °C beträgt.

4. Verfahren nach einem der Ansprüche 1 bis 3, wobei der Druckregler (32) das flüssige Kohlendioxid auf 6 Bar druckentlastet.

5. Verfahren nach einem der Ansprüche 1 bis 4, ferner umfassend:
Verdichten des Kohlendioxidgasstroms (36) über einen Verdichter (82, 84), der in dem Strömungsweg stromaufwärts der Kühleinheit (30) angeordnet ist.

6. Verfahren nach Anspruch 5, wobei der Verdichter (82, 84) weniger als drei Stufen einschließt.

7. Verfahren nach einem der Ansprüche 1 bis 6, ferner umfassend:
Rückführen des Kohlendioxid-Abdampfs (114) aus dem in der Produktstufe (28) gespeicherten flüssigen Kohlendioxids in den Strömungsweg an einem Punkt (116) stromaufwärts der Kühleinheit (30).

8. Verfahren nach Anspruch 7, ferner umfassend:
Kühlen des flüssigen Kohlendioxids über den Kohlendioxid-Abdampf (114) an einem Punkt in dem Strömungsweg stromabwärts der Kühleinheit (30).

9. System (10) zum Herstellen von flüssigem Kohlendioxid, umfassend:
eine oder mehrere Leitungen (12, 14, 16, 18, 20, 22), die einen Strömungsweg definieren, der ein erstes Ende (24) zum Aufnehmen eines Kohlendioxidgasstroms (36), und ein zweites Ende (26) zum fluidischen Verbinden des Strömungswegs mit einer Produktstufe (28) aufweist;
eine Kühleinheit (30) in Heizkontakt mit dem Strömungsweg stromabwärts des ersten Endes (24);
einen Druckregler (32), der in dem Strömungsweg stromabwärts der Kühleinheit (30) angeordnet ist; und
wobei, wenn der Kohlendioxidgasstrom (36) durch den Strömungsweg fließt, die Kühleinheit (30) den Kohlendioxidgasstrom (36) in flüssiges Kohlendioxid kondensiert,
der Druckregler (32) das flüssige Kohlendioxid druckentlastet, um das flüssige Kohlendioxid auf eine Speicherungstemperatur zu kühlen, die unter einer Umgebungstemperatur einer Produktstufe (28) liegt, die fluidisch mit dem zweiten Ende (26) der Leitung (12, 14, 16, 18, 20, 22) verbunden ist, und
das flüssige Kohlendioxid bei der Speicherungstemperatur in der Produktstufe (28) gespeichert wird, **dadurch gekennzeichnet, dass**
die Kühleinheit (30) einen ersten Wärmetauscher (92) und einen zweiten Wärmetauscher (102), die beide in Heizkontakt mit dem Strömungsweg sind, und eine Pumpe (106) zwischen dem ersten Wärmetauscher (92) und dem zweiten Wärmetauscher (102) einschließt, sodass die Kühleinheit (30) den Kohlendioxidgasstrom (36) durch Kühlen des Kohlendioxidgasstroms (36) über den ersten Wärmetauscher (92) auf eine Kondensationstemperatur in das flüssige Kohlendioxid kondensiert, das flüssige CO₂ mittels der Pumpe (106) druckbeaufschlagt und der zweite Wärmetauscher (102) das flüssige Kohlendioxid kühlt.

10. System (10) nach Anspruch 9, wobei die Kühleinheit den Kohlendioxidgasstrom durch Kühlen des Kohlendioxidgasstroms auf zwischen etwa 20 °C und etwa -56,0 °C kondensiert.

11. System (10) nach Anspruch 9, wobei die Speicherungstemperatur zwischen etwa 20 °C und etwa -56.0 °C beträgt.

12. System (10) nach einem der Ansprüche 9 bis 11, wobei der Druckregler (32) das flüssige Kohlendioxid auf 6 Bar druckentlastet.

13. System (10) nach einem der Ansprüche 9 bis 12, ferner umfassend:
einen Verdichter (82, 84), der in dem Strömungsweg stromaufwärts der Kühleinheit (30) angeordnet ist, der den Kohlendioxidgasstrom (36) verdichtet.

## Revendications

1. Procédé de production de dioxyde de carbone liquide comprenant :
la réception d'un flux gazeux de dioxyde de carbone (36) à une première extrémité (24) d'un trajet d'écoulement défini par un ou plusieurs conduits (12, 14, 16, 18, 20, 22) ;
la condensation du flux gazeux de dioxyde de carbone (36) en dioxyde de carbone liquide par l'intermédiaire d'une unité de réfrigération (30) en contact de chauffage avec le trajet d'écoulement en aval de la première extrémité (24);
la dépressurisation du dioxyde de carbone liquide par l'intermédiaire d'un régulateur de pression (32) disposé dans le trajet d'écoulement en aval de l'unité de réfrigération (30) de manière à refroidir le dioxyde de carbone liquide à une température de stockage qui est inférieure à une température ambiante d'une phase de produit (28) reliée fluidiquement à une deuxième extrémité (26) du conduit (12, 14, 16, 18, 20, 22) ; et
le stockage du dioxyde de carbone liquide à la température de stockage dans la phase de produit (28), **caractérisé en ce que** la condensation du flux gazeux de dioxyde de carbone (36) en dioxyde de carbone liquide par l'intermédiaire d'une unité de réfrigération (30) comprend :
le refroidissement du flux gazeux de dioxyde de carbone (36) par l'intermédiaire d'un premier échangeur de chaleur (92) de l'unité de réfrigération (30) à une température de condensation ;
la mise sous pression du CO₂ liquide au moyen d'une pompe (106) et :
le refroidissement ultérieur du dioxyde de carbone liquide par l'intermédiaire d'un deuxième échangeur de chaleur (102) de l'unité de réfrigération (30).

2. Procédé selon la revendication 1, dans lequel la condensation du flux gazeux de dioxyde de carbone (36) en dioxyde de carbone liquide par l'intermédiaire d'une unité de réfrigération (30) comprend :
le refroidissement du flux gazeux de dioxyde de carbone (36) à entre environ 20 °C et environ -56,0 °C par l'intermédiaire du premier échangeur de chaleur (92) de l'unité de réfrigération (30).

3. Procédé selon la revendication 1, dans lequel la température de stockage est comprise entre environ 20 °C et environ -56,0 °C.

4. Procédé selon l'une quelconque des revendications 1 à 3, dans lequel le régulateur de pression (32) dépressurise le dioxyde de carbone liquide à 6 bar.

5. Procédé selon l'une quelconque des revendications 1 à 4, comprenant en outre : la compression du flux gazeux de dioxyde de carbone (36) par l'intermédiaire d'un compresseur (82, 84)
disposé dans le trajet d'écoulement en amont de l'unité de réfrigération (30).

6. Procédé selon la revendication 5, dans lequel le compresseur (82, 84) inclut moins de trois phases.

7. Procédé selon l'une quelconque des revendications 1 à 6, comprenant en outre :
le renvoi de l'évaporation du dioxyde de carbone (114) depuis le dioxyde de carbone liquide stocké dans la phase de produit (28) au trajet d'écoulement en un point (116) en amont de l'unité de réfrigération (30).

8. Procédé selon la revendication 7 comprenant en outre :
le refroidissement du dioxyde de carbone liquide par évaporation du dioxyde de carbone (114) en un point dans le trajet d'écoulement en aval de l'unité de réfrigération (30).

9. Système (10) pour produire du dioxyde de carbone liquide comprenant :
un ou plusieurs conduits (12, 14, 16, 18, 20, 22) qui définissent un trajet d'écoulement ayant une première extrémité (24) pour recevoir un flux gazeux de dioxyde de carbone (36), et une deuxième extrémité (26) pour relier fluidiquement le trajet d'écoulement à une phase de produit (28);
une unité de réfrigération (30) en contact de chauffage avec le trajet d'écoulement en aval de la première extrémité (24);
un régulateur de pression (32) disposé dans le trajet d'écoulement en aval de l'unité de réfrigération (30) ; et
dans lequel lorsque le flux gazeux de dioxyde de carbone (36) s'écoule à travers le trajet d'écoulement, l'unité de réfrigération (30) condense le flux gazeux de dioxyde de carbone (36) en dioxyde de carbone liquide,
le régulateur de pression (32) dépressurise le dioxyde de carbone liquide de manière à refroidir le dioxyde de carbone liquide à une température de stockage qui est inférieure à une température ambiante d'une phase de produit (28) reliée fluidiquement à la deuxième extrémité (26) du conduit (12, 14, 16, 18, 20, 22), et
le dioxyde de carbone liquide est stocké à la température de stockage dans la phase de produit (28), **caractérisé en ce que**
l'unité de réfrigération (30) inclut un premier échangeur de chaleur (92) et un deuxième échangeur de chaleur (102) l'un et l'autre en contact de chauffage avec le trajet d'écoulement et une pompe (106) entre le premier échangeur de chaleur (92) et le deuxième échangeur de chaleur (102), de telle sorte que l'unité de réfrigération (30) condense le flux gazeux de dioxyde de carbone (36) en dioxyde de carbone liquide par l'intermédiaire du refroidissement du flux gazeux de dioxyde de carbone (36) par l'intermédiaire du premier échangeur de chaleur (92) à une température de condensation, pressurise le CO₂ liquide au moyen de la pompe (106), et le deuxième échangeur de chaleur (102) refroidit le dioxyde de carbone liquide.

10. Système (10) selon la revendication 9, dans lequel l'unité de réfrigération condense le flux gazeux de dioxyde de carbone par l'intermédiaire du refroidissement du flux gazeux de dioxyde de carbone jusqu'à entre environ 20 °C et environ -56,0 °C.

11. Système (10) selon la revendication 9, dans lequel la température de stockage est comprise entre environ 20 °C et environ -56,0 °C.

12. Système (10) selon l'une quelconque des revendications 9 à 11, dans lequel le régulateur de pression (32) dépressurise le dioxyde de carbone liquide à 6 bar.

13. Système (10) selon l'une quelconque des revendications 9 à 12, comprenant en outre :
un compresseur (82, 84) disposé dans le trajet d'écoulement en amont de l'unité de réfrigération (30) qui comprime le flux gazeux de dioxyde de carbone (36).
